# EUROPÄISCHE PATENTANMELDUNG

(11) **EP 2 050 416 A2**
(43) Veröffentlichungstag der Anmeldung: **22.04.2009**
(21) Anmeldenummer: 08016608.5
(22) Anmeldetag: 22.09.2008
(51) Int. Cl.: A61C 8/00

(54) **Vorrichtung zur spielfreien sicheren Fixierung von Prothetikteilen**

(30) Priorität: 18.10.2007 DE 102007050285
(71) Anmelder: Heraeus Kulzer GmbH, 63450 Hanau (DE)
(72) Erfinder: Winterhoff, Jörg, 63450 Hanau (DE)
(74) Vertreter: Kühn, Hans-Christian

(57) **Zusammenfassung**

Die Erfindung betrifft eine Vorrichtung zum Halten von Teilen, insbesondere von Dentalimplantatteilen, mit einer Aufnahmehülse, die einen Hohlraum konzentrisch zu Ihrer Längsachse aufweist, der von einer ersten Stirnseite der Aufnahmehülse ausgehend sich zumindest über einen Teil der Länge der Aufnahmehülse erstreckt, wobei die Aufnahmehülse mehrere, sich von der ersten Stirnseite ausgehende, sich längs der Aufnahmehülse erstreckende Schlitze aufweist, und besteht darin, dass um die Außenseite der Aufnahmehülse herum ein Gewinde angeordnet ist, dass an dem Gewinde der Aufnahmehülse eine Gewindehülse angeordnet ist und dass zumindest ein Teil der Innenseite der Gewindehülse und/oder die Außenseite der Aufnahmehülse im Bereich der Schlitze und/oder des Gewindes der Aufnahmehülse konisch ausgebildet ist.

## Beschreibung

Die Erfindung betrifft eine Vorrichtung zum Halten von Teilen, insbesondere von Dentalimplantatteilen, mit einer Aufnahmehülse, die einen Hohlraum konzentrisch zu Ihrer Längsachse aufweist, der von einer ersten Stirnseite der Aufnahmehülse ausgehend sich zumindest über einen Teil der Länge der Aufnahmehülse erstreckt, wobei die Aufnahmehülse mehrere, sich von der ersten Stirnseite ausgehende, sich längs der Aufnahmehülse erstreckende Schlitze aufweist. Zwischen den Schlitzen sind Halteelemente angeordnet.

Dentalimplantatteile sind unter anderem Dentalimplantate selbst sowie die mit den Implantaten verbundenen bzw. in Verbindung bringbaren Dentalimplantataufbauten, wie Abutments oder zum Beispiel Einheilkappen oder sonstige Prothetikteile.

Bei der Bearbeitung von Dentalimplantatteilen oder Prothetikteilen finden heute verschiedene Haltesystem Anwendung, die jedoch aufgrund bestehender Konstruktions- und daraus resultierender Fertigungsmerkmale eine feste und spielfrei Fixierung häufig nicht gewährleisten oder nur unter nachteiligen Begleitwirkungen gewährleisten oder die von Bauart und Größe her ungeeignet sind, beispielsweise in zahntechnische Modelle, Frässystem oder Scanner integriert werden zu können. Solche Haltesysteme sind häufig als Handinstrumente, auch als Zangen oder Klemmen bekannt.

Bestehende Implantatsysteme weisen, bedingt durch Konstruktion und Fertigungstoleranzen, eine Spielpassung zwischen Abutment und Laboranalog auf. Dies führt bei der Bearbeitung eines Abutments zu Ungenauigkeiten, da die Wiederholgenauigkeit der Fixierung abhängig von dem Gesamtspiel in der Rotationssicherung ist. Ein übliches Drehspiel bei Sechskantverbindungen beispielsweise beträgt bis zu 3 Grad. Für einen ausreichend festen Sitz des Prothetikteils oder Dentalimplantatteils bei kräfteintensiven Manipulationen, wie beispielsweise beim Fräsen oder Polieren, muss dieses fest verschraubt werden, wobei Beschädigungen auftreten können. Die Abutmentschraube kann unzulässig gedehnt werden, so dass die spätere Versorgung des Patienten mit einer neuen Schraube erfolgen muss oder es wird eine separate Laborschraube verwendet. Spannbare Handinstrumente, bei denen das Problem der Schraubenverspannung über externe Spanneinheiten gelöst wird, erfüllen zwar die Aufgabe des Schraubenschutzes, jedoch nicht die Forderung nach einem spielfreien Sitz des Abutments, so dass Passungsfehler zum parallel angefertigten Modell entstehen können. Solche Instrumente haben weiterhin häufig den Nachteil, dass sie nicht in Modelle, Fräsgeräte oder Scanner eingebunden werden können. Die Implantatabutments müssen daher während der Bearbeitung oft zur Kontrolle zwischen Handinstrument und Modell umgesetzt werden.

Die Verkleinerung der Fertigungstoleranzen, um die Spielpassung letztendlich nur zu reduzieren, ist ein wirtschaftlich in der Regel nicht sinnvoller Weg. Eine solche Dimensionierung der Verschraubungen, dass ein festerer Sitz erreicht wird, ist aus konstruktiver Sicht in der Regel nicht sinnvoll, da dieser aufgrund der vorgegebenen Größe und Funktion der Prothetikteile ohnehin nur selten möglich ist. Darüber hinaus wird auf diesem Weg nicht das potentielle Drehspiel verringert.

Aus DE 42 35 801 A1 ist ein Dentalimplantat mit einem im Kiefer verankerbaren Implantatkörper und einem Aufbauteil bekannt, bei der ein spielfreier Sitz des Abutments erzielt werden soll. Die Halterung soll hier durch eine Deformation, d. h., eine Materialverschiebung oder Verpressung eines weichen Werkstoffes bis in den plastischen Bereich hinein erzielt werden. Die in der Druckschrift beschriebenen Schlitze dienen dazu, eine Aufweitung zu ermöglichen. Die Verformung bzw. Aufweitung erfolgt dabei in Bereichen des Abutments selbst, so dass spezielle Abutments zur Verwendung in dieser Halterung notwendig sind. Nach einmaliger plastischer Aufweitung des Abutments wird ein Entfernen und Wiedereinsetzen extrem schwierig oder unmöglich. In der Druckschrift ist eine sogenannte Einwegfixierung in einem intraoralen Implantat beschrieben.

Eine Vorrichtung zur Durchführung einer Dentalimplantation ist aus DE 40 36 753 A1 bekannt. Hier wird über eine Schraube eine Spreizung in der Art eines Dübels bewirkt, wodurch ein Implantat im Knochen fixiert wird.

Der Erfindung liegt die Aufgabe zugrunde, die bekannte Haltevorrichtung zu verbessern, so dass insbesondere die Genauigkeit der Arbeiten erhöht werden kann und Nacharbeiten sowie häufige Kontrollen vermieden werden können. Insbesondere bei mehrgliedrigen Versorgungen können eine Reihe von Ungenauigkeiten auftreten, die Nacharbeiten in entsprechend großem Umfang erfordern.

Die Aufgabe wird erfindungsgemäß durch die Merkmale des Anspruchs 1 gelöst. Es wird eine universelle Halterung vorgeschlagen, die einen festen, spielfreien und eindeutigen Sitz von Dentalteilen oder Prothetikteilen ermöglicht und die sowohl in Modelle integrierbar ist, wie auch in Handinstrumente, Frässysteme, Scanner usw.. Dadurch können Prothetikteile einfach, zeitsparend, mit einer hohen Präzision und mit hohem Verarbeitungskomfort bearbeitet werden. Insbesondere ist das dadurch möglich, dass bei der eingangs beschriebenen Vorrichtung um die Außenseite der Aufnahmehülse herum ein Gewinde angeordnet ist, das an dem Gewinde der Aufnahmehülse eine Gewindehülse angeordnet ist und dass zumindest ein Teil der Innenseite der Gewindehülse und/oder die Außenseite der Aufnahmehülse im Bereich der Schlitze und/oder des Gewindes der Aufnahmehülse konisch ausgebildet ist. Beim Drehen der Gewindehülse wird ein Teil der Gewindehülse von außen gegen den geschlitzten Teil der Aufnahmehülse gepresst, so dass die zwischen den Schlitzen befindlichen Halteelemente der Aufnahmehülse in deren Inneres hineingedrückt werden und dort ein in der Aufnahmehülse angeordnetes zu haltendes Teil kraftschlüssig fixieren. Dabei erfolgt ein spielfreies, selbstzentrierendes Anliegen der Kontaktflächen der Halteelemente an dem zu fixierenden Teil, wobei eine aktivierbare progressive und ebenso deaktivierbare degressive formkongruent retentive und positionierende Klemmfunktion der Kontaktflächen besteht. Unabhängig von den üblichen Fertigungstoleranzen kann somit beispielsweise ein Dentalimplantatteil bzw. Prothetikteil immer spielfrei, selbstzentrierend und regelbar festgehalten werden. Die äußere Form der Vorrichtung, insbesondere außerhalb des Bewegungsbereichs der Gewindehülse, kann für eine manuelle Handhabung, eine Integrierbarkeit in Modelle, in Fräsgeräte oder andere Geräte ausgebildet sein. Die Elastizität der Halteelemente der Aufnahmehülse sichert die einwandfreie Funktionsfähigkeit der Vorrichtung, sowohl zum Fixieren als auch zum Lösen, um die gehaltenen Teile wieder zu entnehmen.

Vorzugsweise ist der Innendurchmesser der Gewindehülse zumindest teilweise kleiner als der Außendurchmesser der Aufnahmehülse an der ersten Stirnseite und/oder zwischen der ersten Stirnseite und dem Gewinde der Aufnahmehülse und/oder an zumindest einem Teil des Gewindes der Aufnahmehülse. Dadurch erfolgt eine Verpressung der äußeren Gewindehülse an die Aufnahmehülse bei einer Bewegung der beiden Bauteile relativ zueinander in einer Richtung bzw. ein Entspannen der Verpressung bei einer gegenteiligen Bewegung. Das Prinzip wird durch eine konische Form der Aufnahmehülse und/oder der Gewindehülse über zumindest einen Teil ihrer Länge erreicht, wobei die konische Form in dem geschlitzten Bereich der Aufnahmehülse bzw. dem den geschlitzten Bereich der Aufnahmehülse umgreifenden Teil der Gewindehülse erfolgt. Vorteilhafterweise kann das Gewinde der Aufnahmehülse zumindest teilweise in dem geschlitzten Bereich der Aufnahmehülse und/oder in dem an den geschlitzten Bereich angrenzenden Bereich angeordnet sein. Es ist auch von Vorteil, dass die Schlitze gleichmäßig um den Umfang der Aufnahmehülse herum verteilt angeordnet sind. Des Weiteren ist es von Vorteil, wenn die Schlitze parallel zur Längsachse der Aufnahmehülse angeordnet sind. Dadurch lässt sich die Elastizität des Materials optimal nutzen und die Halteelemente lassen sich leicht nach innen drücken.

Zweckmäßig ist es weiterhin, dass das Gewinde der Aufnahmehülse bis an die erste Stirnseite angeordnet ist und dass sich an das Gewinde eine konische Außenkontur der Aufnahmehülse anschließt, wobei der Durchmesser des Konus an seiner dem Gewinde abgewandten Seite größer ist als an seiner dem Gewinde zugewandten Seite, wobei der Durchmesser des Konus zumindest teilweise größer ist als der Innendurchmesser der Gewindehülse ist und wobei dieser Bereich mit dem größeren Durchmesser zumindest teilweise durch die Schlitze geschlitzt ist. Unter der konischen Form wird dabei nicht nur ein linearer, geradliniger Verlauf der Durchmesserveränderung verstanden, sondern der Durchmesser kann sich auch entlang einer nicht linearen Kurve ändern. Vorteilhaft ist es, dass der größere Durchmesser des Konus der Aufnahmehülse an der ersten Stirnseite angeordnet ist, da sich eine solche Vorrichtung relativ leicht fertigen und bedienen lässt. Der Hohlraum kann längs durch die Aufnahmehülse durchgehend oder als Sackloch ausgebildet sein, um unterschiedliche Rahmenbedingungen, wie beispielsweise Länge oder Form der zu haltenden Teile optimal zu berücksichtigen. Der Hohlraum kann an zumindest einem Teil seiner Länge ein Innengewinde aufweisen, um dort eine Verschraubung und somit Fixierung des zu haltenden Teils an der Stelle dieses Gewindes zu gewährleisten. Dieses Innengewinde ist natürlich sinnvoller Weise außerhalb des geschlitzten Bereiches angeordnet. Der Hohlraum kann vorzugsweise über zumindest einen Teil seiner Länge einen polygonen Querschnitt aufweist, wodurch die Verdrehsicherheit der zu haltenden Teile verbessert wird. Die Schlitze können des Weiteren an ihrer dem Hohlraum zugewandten Seite breiter sein als an der Außenseite der Aufnahmehülse. Auf diese Weise könnten entsprechende Außenkonturen der zu haltenden Teile im Bereich dieser verbreiterten Bereiche der Schlitze angeordnet werden, so dass auch dadurch die Verdrehsicherheit der zu haltenden Teile in der Vorrichtung verbessert wird. Dabei muss die Breite der Schlitze zumindest in dem Bereich, in dem die Außenkontur des zu haltenden Teils aufgenommen wird, im entspannten, also geöffneten Zustand der Vorrichtung breiter sein als die entsprechenden in den Schlitzen anzuordnenden Oberflächenbereiche der zu haltenden Teile.
Nachfolgend werden Ausführungsbeispiele der erfindungsgemäßen Vorrichtung an Hand von Zeichnungen erläutert. In den Zeichnungen zeigen:
- Fig. 1: eine erfindungsgemäße Vorrichtung mit konischem Gewinde im Längsschnitt
- Fig. 2: eine weitere Ausführungsform der Erfindung mit konischem Gewinde im Längsschnitt
- Fig. 3: eine erfindungsgemäße Vorrichtung mit konischer Form außerhalb des Gewindes im Längsschnitt
- Fig. 4: eine weitere Ausführungsform mit konischer Form außerhalb des Gewindes im Längsschnitt
- Fig. 5: Querschnitt durch eine erfindungsgemäße Vorrichtung im Bereich des Hohlraumes
- Fig. 6: Längsschnitt durch eine weitere Ausführungsform der erfindungsgemäßen Vorrichtung
- Fig. 7: weiterer Längsschnitt durch die Vorrichtung gemäß Figur 6
- Fig. 8: Querschnitt durch eine Vorrichtung mit an der Innenseite aufgeweiteten Schlitzen
- Fig. 9: Querschnitt durch eine Vorrichtung mit kreisförmiger Innenkontur
- Fig.10: Längsschnitt einer Vorrichtung mit Hohlraum mit Innengewinde
- Fig.11 a - d: Querschnitte von erfindungsgemäßen Vorrichtungen mit unterschiedlicher Innenkontur.

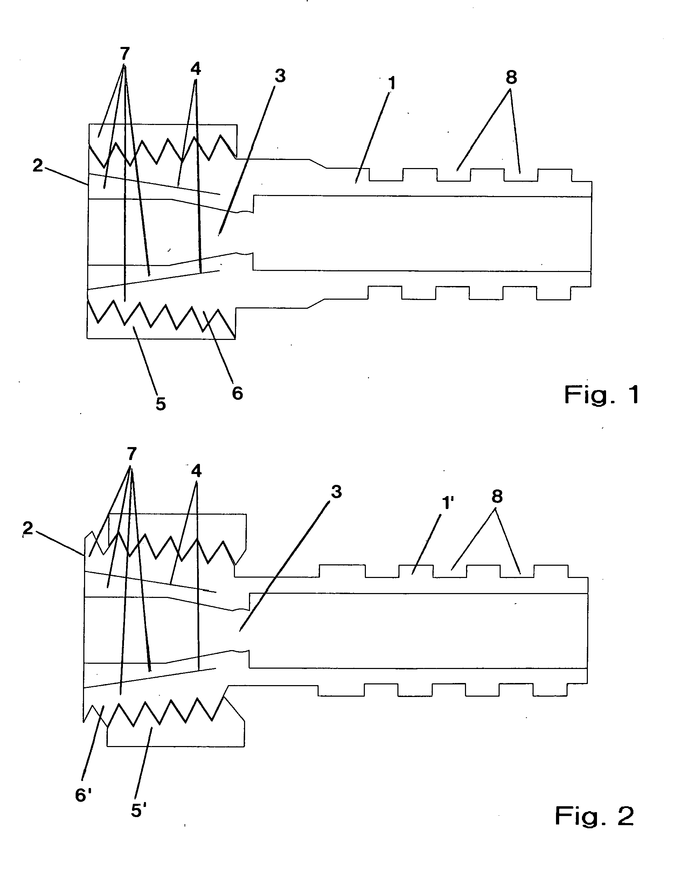

In Figur 1 ist eine erfindungsgemäße Aufnahmehülse 1 dargestellt, in deren von ihrer ersten Stirnseite 2 ausgehenden Hohlraum 3 sich ein in der Zeichnung nicht dargestelltes Implantatteil, z. B. ein Abutment, zur Bearbeitung fixieren lässt. Die Fixierung erfolgt mittels der von der ersten Stirnseite 2 ausgehenden Schlitze 4. Diese werden beim Drehen der Gewindehülse 5 auf dem Gewinde 6 der Aufnahmehülse 1 in Richtung des der ersten Stirnseite 2 abgewandten Teils der Aufnahmehülse 1 zusammengedrückt. Sie drücken damit die zwischen den Schlitzen 4 angeordneten Halteelemente 7 zur Achse der Aufnahmehülse 1 hin und damit gegen das zu haltende Abutment, welches dadurch in der Vorrichtung fixiert wird. Der der ersten Stirnseite 2 abgewandte Teil der Aufnahmehülse 1 kann bei entsprechender Ausbildung von Hand gehalten werden oder auch mittels der Rastnuten 8 in einen Halter eingespannt sowie in ein zahntechnisches Modell eingegossen werden. Nach Bearbeitung des Abutments kann dieses nach Drehen der Gewindehülse 5 in Richtung der ersten Stirnseite 2 gelöst und entnommen werden. In der Figur ist die konische, sich zur ersten Stirnseite 2 hin verengende Form des Gewindes 6 der Aufnahmehülse 1 erkennbar. Das entsprechende Innengewinde der Gewindehülse 5 ist an die Form des Gewindes 6 angepasst, weißt also auch an ihrem der ersten Stirnseite 2 zugewandten Seite den geringeren Durchmesser auf.

Die in Figur 2 dargestellte Vorrichtung entspricht im Wesentlichen der in Figur 1 gezeigten Vorrichtung, allerdings mit entgegengesetztem konischem Gewindeverlauf. Das Gewinde 6' der Aufnahmehülse 1' und das entsprechend angepasste Gewinde der Gewindehülse 5' sind konisch ausgebildet, wobei ihr größerer Durchmesser an ihrer der ersten Stirnseite 2 angeordneten Seite liegt. Dadurch verändert sich der Bewegungsablauf, weil das Zusammendrücken der Schlitze 4 bei dieser Vorrichtung durch Drehen der Gewindehülse 5' in Richtung der ersten Stirnseite 2 und das Lösen der Fixierung in entgegengesetzte Richtung erfolgt.

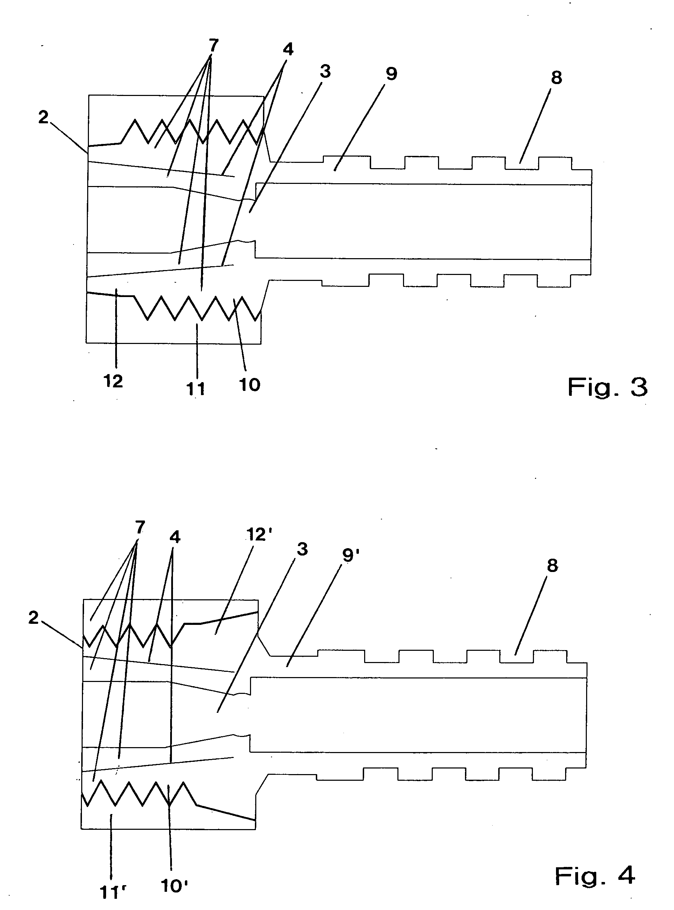

Im Gegensatz zu den in den Figuren 1 und 2 dargestellten Vorrichtungen weisen die in den Figuren 3 und 4 dargestellten Aufnahmehülsen 9; 9' kein konisches, sondern ein zylindrisches Gewinde 10 auf, ebenso wie die darauf aufgeschraubte Gewindehülse 11; 11'. In Figur 3 weist die Aufnahmehülse 9 zwischen der ersten Stirnseite 2 und dem Gewinde 10 einen konischen Abschnitt 12 auf, mit einer Verjüngung in Richtung der ersten Stirnseite 2. Daran angepasst ist die Form der Gewindehülse 11. Die Fixierung eines Abutments oder eines anderen Teils erfolgt durch das Schrauben der Gewindehülse 11 in Richtung des der ersten Stirnseite 2 der Aufnahmehülse 9 abgewandten Endes, wobei der konische Teil 12 der Aufnahmehülse 9 mit seinen Halteelementen 7 zusammengedrückt wird, so dass das aufzunehmende Teil fixiert wird. Das Lösen erfolgt in entgegengesetzter Richtung. Bei der in Figur 4 dargestellten Ausführungsform ist das Gewinde 10 der Aufnahmehülse 9' zunächst der ersten Stirnseite 2 angeordnet und der Konus 12' der Aufnahmehülse 9' schließt an das Gewinde 10 auf der der ersten Stirnseite 2 abgewandten Seite des Gewindes 10' an. Der Konus 12' verengt sich in Richtung der ersten Stirnseite 2, er verläuft bis in den Bereich der Schlitze 4, so dass die Lamellen 7 bei einem Verschrauben der Gewindehülse 11' in Richtung des der ersten Stirnseite 2 abgewandten Endes der Aufnahmehülse 9' zusammengedrückt werden und das zu haltende Teil fixiert wird.

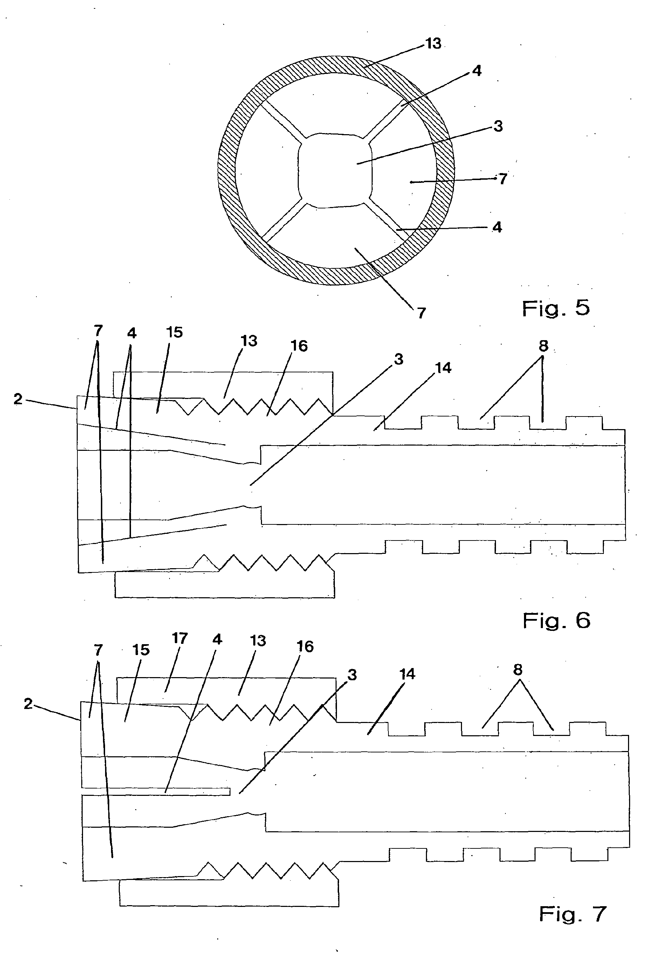

In den Figuren 5, 6 und 7 ist eine Haltevorrichtung dargestellt, deren der ersten Stirnseite 2 zugewandter Hohlraum 3 die Form eines an seinen Ecken gerundeten Trapezes im Querschnitt aufweist, wobei die Schlitze 4 jeweils von den gerundeten Ecken des Querschnitts 3 radial sich erstrecken. In den Figuren 6 und 7 ist erkennbar, dass die hier dargestellte Haltevorrichtung eine Aufnahmehülse 14 aufweist, an deren erster Stirnseite 2 zunächst ein an seinem äußeren Umfang konisch verlaufender Teil 15 angeordnet ist, dessen Durchmesser an der ersten Stirnseite 2 am größten ist. An diesen konisch verlaufenden Teil 15 schließt sich das zylindrische Gewinde 16 an. Die Gewindehülse 13 weist zunächst an ihrer der ersten Stirnseite 2 zugewandten Seite einen Hohlzylinder 17 auf, dessen Innenkontur zylindrisch ausgebildet ist. An diesen Hohlzylinder 17 schließt sich dann das Gewinde der Gewindehülse 13 an. Wenn die Gewindehülse 13 in Richtung der ersten Stirnseite geschraubt wird, drückt die Innenseite des Hohlzylinders 17 gegen den außen konischen Teil der Halteelemente 7, so dass diese unter Zusammendrücken der Schlitze 4 zusammengedrückt werden und das zu haltende Teil im Hohlraum 3 fixieren.

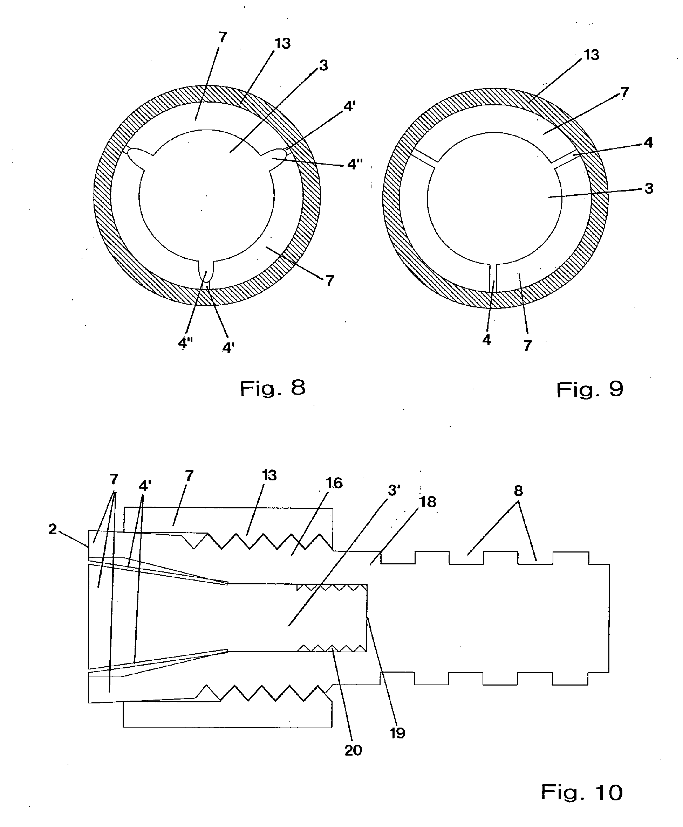

Figur 8 zeigt den Querschnitt durch eine Haltevorrichtung mit drei gleichmäßig verteilten Schlitzen 4'. Diese Schlitze 4' sind an ihrer dem Hohlraum 3 zugewandten Seite 4" breiter als im übrigen Teil. Sofern an dem zu haltenden Teil, beispielsweise einem Abutment, im Bereich seines zu fixierenden Umfanges Noppen angeordnet sind, können diese in den in Figur 8 gezeigten Schlitzen 4'; 4" angeordnet und beim Fixieren, das heißt beim Zusammendrücken der Schlitze 4'; 4" eingeklemmt werden, wobei die Fixierungswirkung verstärkt wird. Figur 9 zeigt den Querschnitt einer erfindungsgemäßen Vorrichtung, bei der drei gleichmäßige Schlitze 4 über den Umfang verteilt sind. Die Innenkontur der Halteelemente 7 weist einen kreisförmigen Querschnitt auf, so dass insbesondere Teile mit einem ebenfalls kreisförmigen Querschnitt sicher fixiert werden können. Die in Figur 10 gezeigte Vorrichtung entspricht bezüglich ihrer Fixierung der in den Figuren 6 und 7 dargestellten Vorrichtung. Im Unterschied zu den Figuren 6 und 7 umfasst die in Figur 10 dargestellte Vorrichtung einen Hohlraum 3', der nicht durchgehende ausgebildet ist, sondern als Sackloch und der an seinem inneren Ende 19 ein Gewinde 20 aufweist zur zusätzlichen Fixierung des zu haltenden Teiles.

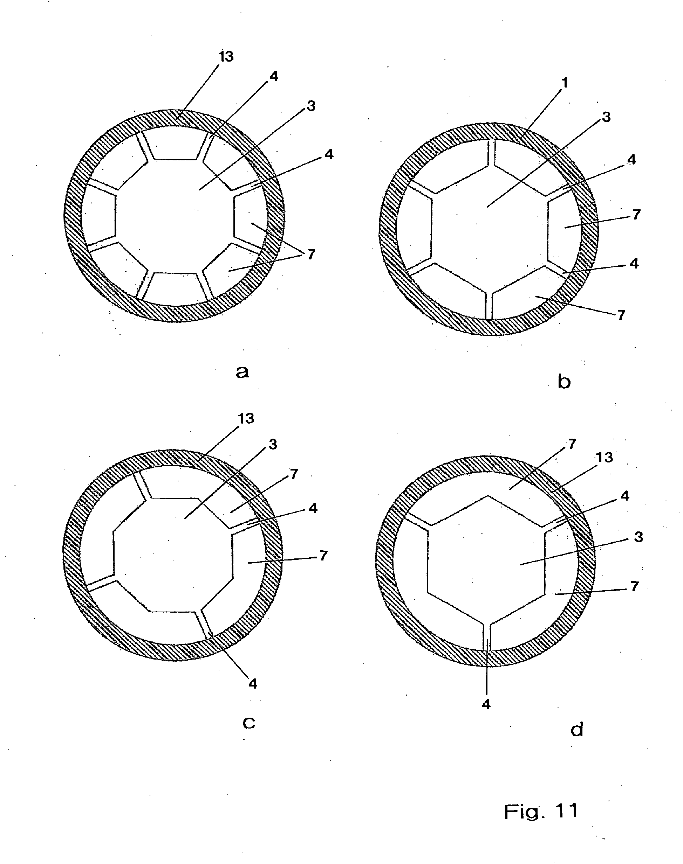

In den Figuren 11 a - 11 d sind erfindungsgemäße Vorrichtungen im Schnitt dargestellt, die einen Hohlraum 3 mit jeweils unterschiedlichem polygonalen Querschnitt aufweisen. Dabei kann die Zahl der Ecken des Polygons durchaus abweichen, insbesondere größer sein als die Zahl der Halteelemente 7 bzw. der dazwischen angeordneten Schlitze 4. Die Innenkontur des Hohlraums 3 ist weitestgehend unabhängig von der Anordnung des Konus bzw. der Schraubrichtung, in der die Fixierung erfolgt. Ebenso ist sie unabhängig davon, ob der Hohlraum innerhalb einer Aufnahmehülse durchgehend oder als Sackloch ausgebildet ist. Wesentlich ist allein, dass die Halteelemente 7 mittels der Gewindehülsen zusammengedrückt bzw. freigegeben werden können, dass sich ein Konus, der sowohl an der Aufnahmehülse als auch an der Gewindehülse angeordnet sein kann, im Bereich der Schlitze befindet. Es ist selbstverständlich, dass der Querschnitt des Hohlraumes insoweit dem Querschnitt des aufzunehmenden Teils angepasst sein muss, als er im entspannten Zustand das zu haltende Teil aufnehmen muss, er an den entsprechenden Stellen seines Querschnitts also größer sein muss als das aufzunehmende Teil. Im gespannten Zustand muss der Querschnitt der Aufnahmehülse soweit verringert sein, dass er zumindest an einem Teil des Umfangs des aufzunehmenden Teils angepresst ist, so dass eine Fixierung erfolgt. In der Praxis werden hierzu solche Haltevorrichtungen angeboten werden müssen, die den verschiedenen zu haltenden Teilen hinsichtlich Größe und Form ihres Hohlraumes angepasst sind.

## Patentansprüche

1. Vorrichtung zum Halten von Teilen, insbesondere von Dentalimplantatteilen, mit einer Aufnahmehülse, die einen Hohlraum konzentrisch zu Ihrer Längsachse aufweist, der von einer ersten Stirnseite der Aufnahmehülse ausgehend sich zumindest über einen Teil der Länge der Aufnahmehülse erstreckt, wobei die Aufnahmehülse mehrere, sich von der ersten Stirnseite ausgehende, sich längs der Aufnahmehülse erstreckende Schlitze aufweist, **dadurch gekennzeichnet, dass** um die Außenseite der Aufnahmehülse herum ein Gewinde angeordnet ist, dass an dem Gewinde der Aufnahmehülse eine Gewindehülse angeordnet ist und dass zumindest ein Teil der Innenseite der Gewindehülse und/oder die Außenseite der Aufnahmehülse im Bereich der Schlitze und/oder des Gewindes der Aufnahmehülse konisch ausgebildet ist.

2. Vorrichtung nach Anspruch 1, **dadurch gekennzeichnet, dass** der Innendurchmesser der Gewindehülse zumindest teilweise kleiner ist als der Außendurchmesser der Aufnahmehülse an der ersten Stirnseite und/oder zwischen der ersten Stirnseite und dem Gewinde der Aufnahmehülse und/oder an zumindest einem Teil des Gewindes der Aufnahmehülse.

3. Vorrichtung nach Anspruch 1 oder 2, **dadurch gekennzeichnet, dass** das Gewinde der Aufnahmehülse zumindest teilweise in dem geschlitzten Bereich der Aufnahmehülse und/oder in dem an den geschlitzten Bereich angrenzenden Bereich angeordnet ist.

4. Vorrichtung nach einem der Ansprüche 1 bis 3, **dadurch gekennzeichnet, dass** die Schlitze gleichmäßig um den Umfang der Aufnahmehülse herum verteilt sind.

5. Vorrichtung nach einem der Ansprüche 1 bis 4, **dadurch gekennzeichnet, dass** die Schlitze parallel zur Längsachse der Aufnahmehülse angeordnet sind.

6. Vorrichtung nach einem der Ansprüche 1 bis 5, **dadurch gekennzeichnet, dass** das Gewinde der Aufnahmehülse bis an die erste Stirnseite angeordnet ist und dass sich an das Gewinde eine konische Außenkontur der Aufnahmehülse anschließt, wobei der Durchmesser des Konus an seiner dem Gewinde abgewandten Seite größer ist als an seiner dem Gewinde zugewandten Seite, wobei der Durchmesser des Konus zumindest teilweise größer als der Innendurchmesser der Gewindehülse ist und wobei dieser Bereich mit dem größeren Durchmesser zumindest teilweise durch die Schlitze geschlitzt ist.

7. Vorrichtung nach einem der Ansprüche 1 bis 6, **dadurch gekennzeichnet, dass** der größere Durchmesser des Konus der Aufnahmehülse an der ersten Stirnseite angeordnet ist.

8. Vorrichtung nach einem der Ansprüche 1 bis 7, **dadurch gekennzeichnet, dass** der Hohlraum längs durch die Aufnahmehülse durchgehend oder als Sackloch ausgebildet ist.

9. Vorrichtung nach einem der Ansprüche 1 bis 8, **dadurch gekennzeichnet, dass** der Hohlraum an zumindest einem Teil seiner Länge ein Innengewinde aufweist.

10. Vorrichtung nach einem der Ansprüche 1 bis 9, **dadurch gekennzeichnet, dass** der Hohlraum über zumindest einen Teil seiner Länge einen polygonen Querschnitt aufweist.

11. Vorrichtung nach einem der Ansprüche 1 bis 10, **dadurch gekennzeichnet, dass** die Schlitze an ihrer dem Hohlraum zugewandten Seite breiter sind als an der Außenseite der Aufnahmehülse.
